# EUROPÄISCHE PATENTSCHRIFT

(11) **EP 0 938 405 B1**
(45) Veröffentlichungstag und Bekanntmachung des Hinweises auf die Patenterteilung: **14.02.2001**
(21) Anmeldenummer: 97951206.8
(22) Anmeldetag: 14.11.1997
(51) Int. Cl.: B27N 7/00

(54) **VERBUNDWERKSTOFFE AUF BASIS VON PFLANZENMATERIALIEN**
COMPOSITE MATERIALS BASED ON VEGETABLE MATERIALS
MATERIAUX COMPOSITES A BASE DE MATIERES VEGETALES

(30) Priorität: 15.11.1996 DE 19647368
(43) Veröffentlichungstag der Anmeldung: 01.09.1999
(73) Patentinhaber: Institut Für Neue Materialien gem. GmbH, 66123 Saarbrücken (DE)
(72) Erfinder: SCHMIDT, Helmut, D-66130 Saarbrücken (DE); MENNIG, Martin, D-66287 Quierschied (DE); JONSCHKER, Gerhard, D-66583 Spiesen-Elversberg (DE)
(74) Vertreter: Barz, Peter, Dr.
(86) Internationale Anmeldenummer: EP9706372
(87) Internationale Veröffentlichungsnummer: WO9822536

(56) Entgegenhaltungen:
- WO-A-95/10491
- WO-A-95/13249
- FR-A- 2 735 705
- US-A- 5 514 734
- DATABASE INSPEC INSTITUTE OF ELECTRICAL ENGINEERS, STEVENAGE, GB Inspec No. 5586731, SCHMIDT H K: "Organically modified silicates and ceramics as two-phasic systems: synthesis and processing" XP002067062 -& 8TH INTERNATIONAL WORKSHOP ON GLASSES AND CERAMICS FROM GELS, FARO, PORTUGAL, 18-22 SEPT. 1995, Bd. 8, Nr. 1-3, ISSN 0928-0707, JOURNAL OF SOL-GEL SCIENCE AND TECHNOLOGY, 1997, KLUWER ACADEMIC PUBLISHERS, NETHERLANDS, Seiten 557-565, XP002067005

## Beschreibung

Die Erfindung betrifft Verbundwerkstoffe, die gekennzeichnet sind durch ein Substrat auf Basis von Pflanzenmaterialien, insbesondere Pflanzenfasern, Pflanzenfaser-Rohstoffen oder Pflanzenfaser-Verarbeitungsprodukten, und ein damit in funktionellem Kontakt stehendes Nanokomposit, das erhältlich ist durch Oberflächenmodifizierung von
a) kolloidalen anorganischen Partikeln mit
b) einem oder mehreren Silanen der allgemeinen Formel (I)

   Rₓ-Si-A₄₋ₓ (I)

   worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols vor dem Inkontaktbringen mit dem Substrat und anschließende Härtung.

Das Substrat kann die verschiedensten physikalischen Formen aufweisen und z.B. als Teilchen, Flocken, Fasern, Band, Bahn, Blatt, Platte oder Block vorliegen, eine Laminatstruktur aufweisen oder einen Formkörper von beliebiger Gestalt darstellen.

Auch das Nanokomposit kann in unterschiedlichen Verteilungsformen vorliegen. Beispielsweise kann das Nanokomposit als kontinuierliche Beschichtung oder Überzug das Substrat ganz oder teilweise bedecken oder laminatartig zwischen mehreren Substraten vorliegen. Alternativ kann das Nanokomposit diskontinuierliche oder auch punktförmige Kontaktstellen zwischen mehreren Substraten bilden und z.B. matrixartig ein teilchen-, flocken- oder faserförmiges Substrat verbinden, wie dies z.B. bei Dämmstoffen der Fall ist.

Als Substratmaterialien für die erfindungsgemäßen Verbundwerkstoffe eignen sich Substrate auf Basis von Pflanzenmaterialien, insbesondere Pflanzenfasern, Pflanzenfaser-Rohstoffen oder Pflanzenfaser-Verarbeitungsprodukten, wobei Holz ausgenommen ist.

Beispiele für geeignete Substratmaterialien sind Naturfasern, z.B. Samenfasern wie Baumwolle; Fruchtwandfasern, wie Kapok; Bastfasern wie Flachs, Hanf, Jute oder Ramie; und Hartfasern wie Sisal oder Kokos. Geeignete Pflanzenfaser-Rohstoffe sind z.B. Schilf und Reis- oder Getreidestroh. Geeignete Pflanzenfaser-Verarbeitungsprodukte sind z.B. Faserbündel, Schnüre, Seile, Taue, Zwirne und Garne sowie Halbzeuge wie Gewebe, Gewirke, Gestricke, Geflechte, Textilien, Vliesstoffe, Filze, Bahnen und Matten.

Das erfindungsgemäß eingesetzte Nanokomposit wird hergestellt durch Oberflächenmodifizierung von kolloidalen anorganischen Partikeln (a) mit einem oder mehreren Silanen (b) gegebenenfalls in Gegenwart von anderen Zusatzstoffen (c) unter den Bedingungen des Sol-Gel-Prozesses.

Einzelheiten des Sol-Gel-Prozesses sind bei C.J. Brinker, G.W. Scherer: "Sol-Gel Science - The Physics and Chemistry of Sol-Gel-Processing", Academic Press, Boston, San Diego, New York, Sydney (1990) und in den DE 1941191, DE 3719339, DE 4020316 und DE 4217432 beschrieben.

Dort sind auch spezielle Beispiele für die erfindungsgemäß einsetzbaren Silane (b) sowie deren hydrolytisch abspaltbare Reste A und hydrolytisch nicht abspaltbare Reste R angegeben.

Bevorzugte Beispiele für hydrolytisch abspaltbare Gruppen A sind Wasserstoff, Halogen (F, Cl, Br und I, insbesondere Cl und Br), Alkoxy (insbesondere C₂₋₄-Alkoxy, wie z.B. Ethoxy, n-Propoxy, i-Propoxy und Butoxy), Aryloxy (insbesondere C₆₋₁₀-Aryloxy, z.B. Phenoxy), Alkaryloxy (z.B. Benzyloxy), Acyloxy (insbesondere C₁₋₄-Acyloxy, wie z.B. Acetoxy und Propionyloxy) und Alkylcarbonyl (z.B. Acetyl). Ebenfalls geeignete Reste A sind Aminogruppen (z.B. Mono- oder Dialkyl-, -aryl- und -aralkylamingruppen mit den oben genannten Alkyl-, Aryl- und Aralkylresten), Amidgruppen (z.B. Benzamido) und Aldoxim- oder Ketoximgruppen. Zwei oder drei Reste A können zusammen auch eine das Si-Atom komplexierende Gruppierung bilden, wie dies z.B. bei Si-Polyolkomplexen der Fall ist, die sich von Glykol, Glycerin oder Brenzkatechin ableiten. Besonders bevorzugte Reste A sind C₂₋₄-Alkoxygruppen, insbesondere Ethoxy. Methoxygruppen sind für die Zwecke der Erfindung weniger geeignet, da sie zu hohe Reaktivität aufweisen (kurze Verarbeitungszeit des Nanokomposit-Sols) und zu Nanokompositen bzw. Verbundmaterialien mit ungenügender Flexibilität führen können.

Die genannten hydrolysierbaren Gruppen A können gegebenenfalls einen oder mehrere übliche Substituenten tragen, z.B. Halogenatome oder Alkoxygruppen.

Die hydrolytisch nicht abspaltbaren Reste R sind vorzugsweise ausgewählt aus Alkyl (insbesondere C₁₋₄-Alkyl, wie Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄Alkinyl, wie Acetylenyl und Propargyl), Aryl (insbesondere C₆₋₁₀-Aryl, wie z.B. Phenyl und Naphthyl) und den entsprechenden Alkaryl- und Arylalkylgruppen. Auch diese Gruppen können gegebenenfalls einen oder mehrere übliche Substituenten, z.B. Halogen-, Alkoxy-, Hydroxy-, Amino- oder Epoxidgruppen, aufweisen.

Die oben genannten Alkyl-, Alkenyl- und Alkinylgruppen schließen die entsprechenden cyclischen Reste, wie z.B. Cyclopropyl, Cyclopentyl und Cyclohexyl, ein.

Besonders bevorzugte Reste R sind gegebenenfalls substituierte C₁₋₄-Alkylgruppen, insbesondere Methyl und Ethyl, und gegebenenfalls substituierte C₆₋₁₀-Alkylgruppen, insbesondere Phenyl.

Weiter ist es bevorzugt, daß in der obigen Formel (I) x den Wert 0, 1 oder 2, und besonders bevorzugt 0 oder 1, aufweist. Ferner weisen vorzugsweise mindestens 60 und insbesondere mindestens 70 Stoffmengen-% der Silane der Formel (I) den Wert x = 1 auf. In bestimmten Fällen kann es noch günstiger sein, wenn mehr als 80 oder sogar mehr als 90 Stoffmengen-% (z.B. 100%) der Silane der Formel (I) den Wert x = 1 aufweisen.

Die erfindungsgemäßen Verbundwerkstoffe können z.B. aus reinem Methyltriethoxysilan (MTEOS) oder aus Mischungen von MTEOS und Tetraethoxysilan (TEOS) als Komponente (b) hergestellt werden.

Die Verwendung von Silanen mit einer oder mehreren Gruppen R, die substituiert sind, empfiehlt sich insbesondere dann, wenn dem Verbundmaterial besondere Eigenschaften verliehen werden soll. Beispielsweise kann durch Einführung von Fluoratomen (z.B. in Form von substituierten aliphatischen (insbesondere Alkyl-) Resten) ein Verbundwerkstoff erhalten werden, der Wasser-, Schmutz-, Staub- und Öl-abweisende Eigenschaften aufweist.

Konkrete Beispiele für Silane der allgemeinen Formel (I) sind Verbindungen der folgenden Formeln:
Si(OC₂H₅)₄, Si(O-n- oder i-C₃H₇)₄-Si(OC₄H₉)₄, SiCl₄, Si(OOCCH₃)₄, CH₃-SiCl₃, CH₃-Si(OC₂H₅)₃, C₂H₅-SiCl₃, C₂H₅-Si(OC₂H₅)₃, C₃H₇-Si(OC₂H₅)₃, C₆H₅-Si-(OC₂H₅)₃, C₆H₅-Si(OC₂H₅)₃, (C₂H₅O)₃-Si-C₃H₆-Cl,(CH₃)₂SiCl₂, (CH₃)₂Si(OC₂H₅)₂, (CH₃)₂Si-(OC₂H₅)₂, (CH₃)₂Si(OH)₂, (C₆H₅)₂SiCl₂, (C₆H₅)₂Si(OC₂H₅)₂, (C₆H₅)₂Si(OC₂H₅)₂, (i-C₃H₇)₃SiOH, CH₂=CH-Si(OOCCH₃)₃, CH₂=CH-SiCl₃, CH₂=CH-Si(OC₂H₅)₃, CH₂=CHSi(OC₂H₅)₃, HSiCl₃, CH₂=CH-Si(OC₂H₄OCH₃)₃, CH₂=CH-CH₂-Si(OC₂H₅)₃, CH₂=CH-CH₂-Si(OC₂H₅)₃, CH₂=CH-CH₂-Si(OOCCH₃)₃, CH₂=C(CH₃)COO-C₃H₇-Si-(OC₂H₅)₃, CH₂=C(CH₃)-COO-C₃H₇-Si(OC₂H₅)₃, n-C₆H₁₃-CH₂-CH₂-Si(OC₂H₅)₃, n-C₈H₁₇-CH₂-CH₂-Si(OC₂H₅)₃,

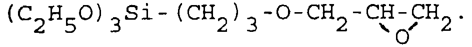

Diese Silane lassen sich nach bekannten Methoden herstellen; vgl. W. Noll, "Chemie und Technologie der Silicone", Verlag Chemie GmbH, Weinheim/Bergstraße (1968).

Bezogen auf die oben genannten Komponenten (a), (b) und (c) beträgt der Anteil der Komponente (b) gewöhnlich 20 bis 95, vorzugsweise 40 bis 90 und besonders bevorzugt 70 bis 90 Masse-%, ausgedrückt als Polysiloxan der Formel: RₓSiO_{(2-0,5x)}, welches bei der Kondensation entsteht.

Die erfindungsgemäß verwendeten Silane der allgemeinen Formel (I) können ganz oder teilweise in Form von Vorkondensaten eingesetzt werden, d.h. Verbindungen, die durch teilweise Hydrolyse der Silane der Formel (I), entweder allein oder im Gemisch mit anderen hydrolysierbaren Verbindungen, entstanden sind. Derartige, im Reaktionsmedium vorzugsweise lösliche Oligomere können geradkettige oder cyclische niedermolekulare Teilkondensate (Polyorganosiloxane) mit einem Kondensationsgrad von z.B. etwa 2 bis 100, insbesondere 2 bis 6, sein.

Die zur Hydrolyse und Kondensation der Silane der Formel (I) eingesetzte Wassermenge beträgt vorzugsweise 0,1 bis 0,9, und besonders bevorzugt 0,25 bis 0,75 Mol Wasser pro Mol der vorhandenen hydrolysierbaren Gruppen. Oft werden besonders gute Ergebnisse mit 0,35 bis 0,45 Mol Wasser pro Mol der vorhandenen hydrolysierbaren Gruppen erzielt.

Spezielle Beispiele für kolloidale anorganische Partikel (a) sind Sole und nanoskalige dispergierbare Pulver (Teilchengröße vorzugsweise bis zu 300, insbesondere bis zu 100 nm und besonders bevorzugt bis zu 50 nm) von SiO₂, TiO₂, ZrO₂, Al₂O₃, Y₂O₃, CeO₂, SnO₂, ZnO, Eisenoxiden oder Kohlenstoff (Ruß und Graphit), insbesondere von SiO₂.

Der Anteil der Komponente (a), bezogen auf die Komponenten (a), (b) und (c), beträgt gewöhnlich 5 bis 60, vorzugsweise 10 bis 40 und besonders bevorzugt 10 bis 20 Masse-%.

Zur Herstellung des Nanokomposits können als Eventualkomponenten (c) andere Zusatzstoffe in Mengen von bis zu 20 Masse%, vorzugsweise bis zu 10 und insbesondere bis zu 5 Masse-% eingesetzt werden, z.B. Härtungskatalysatoren wie Metallsalze und Metallalkoxide (z.B. Aluminium-, Titan-, Zirkonalkoxide), organische Bindemittel wie Polyvinylalkohol, Polyvinylacetat, Stärke, Polyethylenglykol und Gummi arabicum, Pigmente, Farbstoffe, flammhemmende Zusätze, Verbindungen glasbildender Elemente (z.B. Borsäure, Borsäureester, Natriummethylat, Kaliumacetat, Aluminium-sek-butylat, etc.), Korrosionsschutzmittel und Beschichtungshilfsmittel. Die Verwendung von Bindemitteln ist erfindungsgemäß weniger bevorzugt.

Die Hydrolyse und Kondensation wird unter Sol-Gel-Bedingungen in Gegenwart saurer Kondensationskatalysatoren (z.B. Salzsäure) bei einem pH-Wert von vorzugsweise 1 bis 2 durchgeführt, bis ein viskoses Sol entsteht.

Vorzugsweise wird neben dem Lösungsmittel, das bei der Hydrolyse der Alkoxygruppen entsteht, kein zusätzliches Lösungsmittel angewandt. Falls gewünscht, können jedoch z.B. alkoholische Lösungsmittel, wie Ethanol, oder andere polare, protische oder aprotische Lösungsmittel, wie Tetrahydrofuran, Dioxan, Dimethylformamid oder Butylglykol, eingesetzt werden.

Um eine günstige Solpartikel-Morphologie und Sol-Viskosität einzustellen, unterwirft man das erhaltene Nanokomposit-Sol vorzugsweise einem gezielten Nachreaktionsschritt, bei dem die Reaktionsmischung mehrere Stunden bis mehrere Tage auf Temperaturen von 40 bis 120°C erwärmt wird. Besonders bevorzugt ist eine eintägige Lagerung bei Raumtemperatur oder eine mehrstündige Erwärmung auf 60-80°C. Hierbei entsteht ein Nanokomposit-Sol mit einer Viskosität von vorzugsweise 5 bis 500 mPas, besonders bevorzugt 10 bis 50 mPas. Selbstverständlich kann die Viskosität des Sols auch durch Zusatz von Lösungsmitteln oder Entfernung von Reaktions-Nebenprodukten (z.B. Alkoholen) auf für den speziellen Anwendungszweck geeignete Werte eingestellt werden. Der Nachreaktionsschritt kann auch vorzugsweise mit einer Reduktion des Lösungsmittelanteils gekoppelt werden.

Der Masseanteil des Nanokomposits am Verbundwerkstoff beträgt vorzugsweise 0,1 bis 80, insbesondere 1 bis 40 und besonders bevorzugt 1 bis 20 Masse-%.

Die Vereinigung von Substrat und Nanokomposit bzw. Nanokomposit-Sol erfolgt nach einer zumindest anfänglichen Hydrolyse der Komponente (b) und auf jeden Fall vor der abschließenden Härtung. Vorzugsweise wird das Nanokomposit-Sol vor dem Inkontaktbringen mit dem Substrat durch Zufuhr einer weiteren Wassermenge aktiviert.

Das Inkontaktbringen kann auf jede dem Fachmann bekannte und für den gegebenen Fall als sinnvoll erachtete Art und Weise erfolgen, z.B. durch einfaches Vermischen von Substrat und Nanokomposit-Sol, Tauchen, Sprühen, Rakeln, Spritzen, Schleudern, Gießen, Streichen, Bürsten usw. in das bzw. mit dem Nanokomposit-Sol. Um die Haftung zwischen Substrat und Nanokomposit zu verbessern, kann es sich in manchen Fällen als vorteilhaft erweisen, das Substrat vor dem Kontaktieren mit dem Nanokomposit bzw. dessen Vorstufe einer üblichen Oberflächen-Vorbehandlung zu unterziehen, z.B. Korona-Entladung, Entfetten, Behandlung mit Primern wie Aminosilanen, Epoxysilanen, Schlichten aus Stärke oder Siliconen, Komplexbildnern, Tensiden etc.

Der abschließenden Härtung kann eine Trocknungsstufe bei Raumtemperatur oder leicht erhöhter Temperatur (z.B. bis zu ca. 50°C) vorangehen.

Die eigentliche Härtung bzw. eine Vorhärtung kann bei Raumtemperatur durchgeführt werden, erfolgt jedoch vorzugsweise durch Wärmebehandlung bei Temperaturen über 50°C, vorzugsweise über 100°C und besonders bevorzugt bei 150°C oder darüber. Übliche Härtungszeiten liegen im Bereich von Minuten bis Stunden, z.B. 2 bis 30 Minuten.

Neben der konventionellen thermischen Härtung (z.B. im Umluftofen) kommen als weitere Härtungsmethoden z.B. die photochemische Härtung (UV-VIS), die Elektronenstrahl-Härtung, Rapid Annealing und die Härtung mit IR- und Laserstrahlen in Frage.

Vor der Härtung kann der hergestellte Verbund gegebenenfalls auch noch zugeschnitten oder einer Formgebung unterzogen werden.

Gegenstand der Erfindung ist auch die Verwendung des obigen Nanokomposits für die Beschichtung und/oder Konsolidierung der obigen Substrate. Der Begriff "Konsolidierung" soll hier alle Maßnahmen einschließen, die geeignet sind, das Substrat in verfestigter bzw. kompaktierter Form bereitzustellen und umfaßt somit z.B. eine Imprägnierung des Substrats mit Nanokomposit, eine Einlagerung des Substrats in eine Matrix aus Nanokomposit oder eine Verklebung bzw. Verbindung von Substraten bzw. Substratteilen mit Nanokomposit. Unter "Beschichtung" wird insbesondere eine teilweise oder vollständige Umhüllung eines Substrats mit einem Nanokomposit verstanden, um diesem Substrat oder Teilen davon besondere Eigenschaften zu verleihen, wie z.B. Oxidationsbeständigkeit, Flammverzögerung, Hydrophobie, Oleophobie, Härte, Undurchlässigkeit, elektrische oder thermische Isolation.

Die Erfindung bezieht sich insbesondere auf wärme- und schalldämmende Leichtbauteile aus dem Verbundwerkstoff, beispielsweise mit Nanokomposit verklebten und zugeschnittenen Strohhalm-Stapeln. Hierbei kann der Verbundwerkstoff gegebenenfalls mit beliebigen anderen Werkstoffen, z.B. Sperrholz-, Holzfaser-, Hartfaser- oder Polystyrol-Platten, laminiert werden. Der Verbundwerkstoff kann auch zwischen zwei oder mehr derartige Laminatschichten eingebracht werden. Derartige Leichtbauwerkstoffe zeichnen sich durch relativ hohe Druckstabilität und gute Flammbeständigkeit (selbstverlöschende Eigenschaften) aus.

Die folgenden Beispiele sollen die vorliegende Erfindung weiter erläutern.

In den folgenden Beispielen handelt es sich bei dem darin eingesetzten Kieselsol um ein wäßriges Kieselsol der Firma BAYER ("Levasil 300/30") mit einem Feststoffgehalt von 30 Masse-% und einer Teilchengröße von 7 bis 10 nm. Weiter werden in den Beispielen die folgenden Abkürzungen verwendet:
- MTEOS =: Methyltriethoxysilan
- TEOS =: Tetraethoxysilan
- PTEOS =: Phenyltriethoxysilan.
- ETEOS =: Ethyltriethoxysilan

### BEISPIEL 1

### 1. Herstellung des Standardbindemittels A

655 g MTEOS und 191 g TEOS werden in einen Kolben eingebracht, worauf man die Mischung unter intensivem Rühren mit 142 g wäßrigem Kieselsol versetzt und unmittelbar 9 ml H₂SO₄ (40 Masse-%) zugibt. Nach ca. 1 Minute intensivem Rühren setzt eine exotherme Reaktion ein (Erwärmung auf ca. 60°C). Vor der weiteren Verwendung wird die Dispersion zur Alterung über Nacht bei Raumtemperatur gelagert oder 1 Stunde unter Rückfluß gekocht.

### 2. Herstellung des Standardbindemittels B

621 g MTEOS und 181 g TEOS werden in einen Kolben eingebracht, worauf man die Mischung unter intensivem Rühren mit 185 g wäßrigem Kieselsol ("Levasil 50/50"; Feststoffanteil SiO₂ 50 Masse-%, von BAYER) versetzt und unmittelbar 10,3 ml H₂SO₄ (40 Masse-%) zugibt. Nach ca. 1 Minute intensivem Rühren setzt eine exotherme Reaktion ein (Erwärmung auf ca. 60°C). Vor der weiteren Verwendung wird die Dispersion zur Alterung über Nacht bei Raumtemperatur gelagert oder 1 Stunde unter Rückfluß gekocht.

### 3. Herstellung des Standardbindemittels C

463 g MTEOS, 180 g TEOS und 128 g Dimethyldiethoxysilan werden in einen Kolben eingebracht, worauf man die Mischung unter intensivem Rühren mit 267 g wäßrigem Kieselsol versetzt und unmittelbar 6,06 ml HCl (37 Masse-%) zugibt. Nach ca. 1 Minute intensivem Rühren setzt eine exotherme Reaktion ein (Erwärmung auf ca. 60°C). Die Dispersion kann direkt nach Abkühlung auf Raumtemperatur verwendet werden.

### BEISPIEL 2

### Herstellung von Kompositen aus Ramie-Gewebe

100 g Standardbindemittel A werden mit 5,2 ml Wasser versetzt (aktiviert) und dann mit 1,4 ml Natriumethanolat-Lösung (21 Masse-%) in Ethanol auf einen pH-Wert von ca. 3-4 neutralisiert. Ramie-Gewebe (Flächengewicht = 228 g/m², 42 cm x 42 cm) wird mit dieser Bindemittel-Dispersion getränkt und mittels eines Foulard ausgedrückt. Die einzelnen Ramie-Gewebelagen werden 3 h im Trockenschrank bei 120°C vorgetrocknet. Zur Herstellung von mehrlagigen Kompositen werden die einzelnen getrockneten Ramie-Gewebelagen erneut mit dem aktivierten Standardbindemittel A getränkt und danach zwischen mit Teflon-Spray behandelten Edelstahlplatten faltenfrei übereinandergelegt und in der Heizpresse bei 120°C und bei einem Preßdruck von 5 kPa 30 min unter vermindertem Druck (550 mbar) gepreßt. Beim Preßvorgang wird der Preßdruck nach 20 min von 5 kPa für weitere 15 min auf 10 kPa erhöht. Mit diesem Verfahren können Ramie-Gewebe-Komposite mit mehreren Lagen hergestellt werden.

### BEISPIEL 3

### Herstellung von Kompositen aus Jute-Gewebe

100 g Standardbindemittel A werden mit wäßriger Natronlauge (120 mg NaOH in 5,2 ml Wasser) neutralisiert und aktiviert. Jute-Gewebe (Flächengewicht = 300 g/m², 42 cm x 42 cm) werden mit dieser Bindemittel-Dispersion getränkt und mittels eines Foulard ausgedrückt. Die einzelnen Jute-Gewebelagen werden 3 h im Trockenschrank bei 120°C vorgetrocknet. Zur Herstellung von mehrlagigen Kompositen werden die einzelnen getrockneten Jute-Gewebelagen erneut mit dem aktivierten, neutralisierten Bindemittel A getränkt und danach zwischen mit Teflon-Spray behandelten Edelstahlplatten faltenfrei übereinandergelegt und in einer Heizpresse bei 120°C und bei einem Preßdruck von 5 kPa 30 min unter vermindertem Druck (550 mbar) gepreßt. Beim Preßvorgang wird der Preßdruck nach 20 min von 5 kPa für weitere 15 min auf 10 kPa erhöht. Mit diesem Verfahren können Jute-Gewebe-Komposite mit mehreren Lagen hergestellt werden.

### BEISPIEL 4

### Herstellung von Stroh-Kompositen

520 ml Wasser werden unter intensivem Rühren zu 10 kg Standardbindemittel A getropft und ca. 10 min gerührt. Danach werden 30 cm lange Strohhalme in die Bindemittel-Dispersion getaucht und abtropfen gelassen. Dabei wird darauf geachtet, daß die Bindemittel-Dispersion im Inneren der Strohhalme wieder vollständig ausläuft. Nach dem Abtropfen werden die Halme parallel unter einer Presse zu einem Quader von ca. 30 cm x 40 cm x 50 cm aufgestapelt und miteinander verpreßt. Zur Verklebung wird die Anordnung bei 140°C in einem belüfteten Trockenschrank 12 h getrocknet. Die zu einem Quader verklebten Strohhalme sind schneidfähig und können zu Platten beliebiger Dicke zersägt werden.

Die erhaltenen Strohplatten können mit beliebigen Werkstoffen laminiert werden. Zum Beispiel wurde eine gesägte Platte von 1 cm Dicke mit 2 Sperrholzplatten von 3 mm Dicke laminiert, indem die Sperrholzplatten mit dem Standardbindemittel B bestrichen und in einer Heizpresse 5 h bei 140°C getrocknet wurden. Der so hergestellte Komposit ist selbstverlöschend und weist eine Druckstabilität von 4 Tonne/cm² auf.

### BEISPIEL 5

Ein aus 47,9 ml MTEOS, 17,9 ml TEOS, 15,4 ml ETEOS sowie 16,4 ml Kieselsol und 0,48 ml konzentrierter Salzsäure hergestelltes Sol wird 15 Minuten nach seiner Herstellung mit Ethanol auf einen Feststoffgehalt von 3 Masse-% verdünnt. Daraufhin tränkt man mit diesem Produkt Baumwollgewebe mit einem Flächengewicht von 50 g/m², das anschließend zwischen zwei Gummiwalzen ausgepreßt wird. Nach 20-minütiger Trocknung bei 100°C erhält man ein imprägniertes Gewebe mit festem Griff. Die Imprägnierung wird auch bei mehrmaligem Waschen nicht entfernt.

### BEISPIEL 6

Man verfährt wie in Beispiel 5 mit der Ausnahme, daß 5 Minuten vor der Verdünnung 1% Fluorsilan (Tridecafluoro-1,1,2,2-tetrahydrooctyl-1-triethoxysilan) zugesetzt wird und daß durch die Verdünnung ein Feststoffgehalt von 1,5 Masse-% erhalten wird. Das Baumwollgewebe wird dadurch Schmutz- und Wasser/Öl-abweisend mit weichem Griff. Die Imprägnierung wird auch durch mehrmaliges Waschen des Gewebes nicht entfernt.

## Patentansprüche

1. Verbundwerkstoff, gekennzeichnet durch ein Substrat auf Basis von Pflanzenmaterialien, insbesondere Pflanzenfasern, Pflanzenfaser-Rohstoffen oder Pflanzenfaser-Verarbeitungsprodukten, und ein mit dem Substrat in funktionellem Kontakt stehendes Nanokomposit, das erhältlich ist durch Oberflächenmodifizierung von
a) kolloidalen anorganischen Partikeln mit
b) einem oder mehreren Silanen der allgemeinen Formel (I)
Rₓ-Si-A₄₋ₓ (I)
worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
unter den Bedingungen des Sol-Gel-Prozesses mit einer unterstöchiometrischen Wassermenge, bezogen auf die vorhandenen hydrolysierbaren Gruppen, unter Bildung eines Nanokomposit-Sols, gegebenenfalls weitere Hydrolyse und Kondensation des Nanokomposit-Sols vor dem Inkontaktbringen mit dem Substrat und anschließende Härtung.

2. Werkstoff nach Anspruch 1, dadurch gekennzeichnet, daß die Oberflächenmodifizierung in Gegenwart eines sauren Kondensationskatalysators bei einem pH-Wert von 1 bis 2 durchgeführt worden ist.

3. Verbundwerkstoff nach Anspruch 1 oder 2, dadurch gekennzeichnet, daß das Nanokomposit-Sol einer Nachreaktion bei Temperaturen von Raumtemperatur bis 120°C unterzogen worden ist.

4. Verbundwerkstoff nach einem der Ansprüche 1 bis 3, dadurch gekennzeichnet, daß die kolloidalen anorganischen Partikel (a) ausgewählt sind aus Solen und nanoskaligen, dispergierbaren Pulvern von SiO₂, TiO₂, ZrO₂, Al₂O₃, Y₂O₃, CeO₂, SnO₂, ZnO, Eisenoxiden oder Kohlenstoff.

5. Verbundwerkstoff nach einem der Ansprüche 1 bis 4, dadurch gekennzeichnet, daß zur Herstellung des Nanokomposit-Sols andere Zusatzstoffe (c) verwendet worden sind, z.B. Härtungskatalysatoren, organische Bindemittel, Pigmente, Farbstoffe, flammhemmende Zusätze, Verbindungen glasbildender Elemente, Korrosionsschutzmittel und/oder Beschichtungshilfsmittel.

6. Verbundwerkstoff nach einem der Ansprüche 1 bis 5, dadurch gekennzeichnet, daß 5 bis 60, vorzugsweise 10 bis 40 und besonders bevorzugt 10 bis 20 Masse-% der Komponente (a) zur Herstellung des Nanokomposits eingesetzt worden sind.

7. Verbundwerkstoff nach einem der Ansprüche 1 bis 6, dadurch gekennzeichnet, daß 20 bis 95, vorzugsweise 40 bis 90 und besonders bevorzugt 70 bis 90 Masse-% der Komponente (b), ausgedrückt als Polysiloxan der Formel: RₓSiO_{(2-0,5x}), zur Herstellung des Nanokomposits eingesetzt worden sind.

8. Verbundwerkstoff nach einem der Ansprüche 5 bis 7, dadurch gekennzeichnet, daß nicht mehr als 20, vorzugsweise nicht mehr als 10 und besonders bevorzugt nicht mehr als 5 Masse-% der anderen Zusatzstoffe (c) zur Herstellung des Nanokomposits eingesetzt worden sind.

9. Verbundwerkstoff nach einem der Ansprüche 1 bis 8, dadurch gekennzeichnet, daß die Oberflächenmodifizierung mit 0,1 bis 0,9, vorzugsweise 0,25 bis 0,75 Mol Wasser pro Mol der vorhandenen hydrolysierbaren Gruppen durchgeführt worden ist.

10. Verbundwerkstoff nach einem der Ansprüche 1 bis 9, dadurch gekennzeichnet, daß der Masseanteil des Nanokomposits 0,1 bis 80, vorzugsweise 1 bis 40 und besonders bevorzugt 1 bis 20 Masse-%, beträgt.

11. Verbundwerkstoff nach einem der Ansprüche 1 bis 10, dadurch gekennzeichnet, daß die Härtung thermisch, vorzugsweise bei Temperaturen zwischen 50°C und 300°C, erfolgt.

12. Verbundwerkstoff nach einem der Ansprüche 1 bis 11 in Form eines mit dem Nanokomposit beschichteten Substrats, eines mit dem Nanokomposit imprägnierten Gewebes oder eines Leichtbauteils, welches das mit dem Nanokomposit konsolidierte Substratmaterial zwischen Laminatschichten enthält.

13. Verwendung eines wie in den Ansprüchen 1 bis 11 definierten Nanokomposits zur Beschichtung und/oder Konsolidierung eines Substrats auf Basis von Pflanzenmaterialien, insbesondere Pflanzenfasern, Pflanzenfaser-Rohstoffen oder Pflanzenfaser-Verarbeitungsprodukten.

## Claims

1. Composite material, characterized by a substrate based on vegetable materials, in particular vegetable fibres, vegetable fibre raw materials or vegetable fibre semifinished products, and by a nanocomposite which is in functional contact with said substrate and is obtainable by surface modification of
a) colloidal inorganic particles with
b) one or more silanes of the general formula (I)
Rₓ-Si-A₄₋ₓ (I)
where the radicals A are identical or different and are hydroxyl groups or groups which can be removed hydrolytically, except methoxy, the radicals R are identical or different and are groups which cannot be removed hydrolytically and x is 0, 1, 2 or 3, where x ≥ 1 in at least 50 mol% of the silanes;
under the conditions of the sol-gel process with a sub-stoichiometric amount of water, based on the hydrolysable groups which are present, with formation of a nanocomposite sol, and further hydrolysis and condensation of the nanocomposite sol, if desired, before it is brought into contact with the substrate, followed by curing.

2. Composite material according to Claim 1, characterized in that the surface modification has been carried out in the presence of an acidic condensation catalyst at a pH of from 1 to 2.

3. Composite material according to Claim 1 or 2, characterized in that the nanocomposite sol has been subjected to a post-reaction at temperatures from room temperature to 120°C.

4. Composite material according to any one of Claims 1 to 3, characterized in that the colloidal inorganic particles (a) are selected from the group consisting of sols and dispersible powders of nano-scaled SiO₂, TiO₂, ZrO₂, Al₂O₃, Y₂O₃, CeO₂, SnO₂, ZnO, iron oxides or carbon.

5. Composite material according to any one of Claims 1 to 4, characterized in that, for preparing the nanocomposite sol, other additives (c) have been used, for example curing catalysts, organic binders, pigments, dyes, flame retardants, compounds of glass-forming elements, anticorrosion agents and/or coating aids.

6. Composite material according to any one of Claims 1 to 5, characterized in that from 5 to 60% by weight, preferably from 10 to 40% by weight, and particularly preferably from 10 to 20% by weight, of component (a) have been employed for preparing the nanocomposite.

7. Composite material according to any one of Claims 1 to 6, characterized in that from 20 to 95% by weight, preferably from 40 to 90% by weight, and particularly preferably from 70 to 90% by weight, of component (b), expressed as polysiloxane of the formula: RₓSiO_{(2-0.5x)} have been employed for preparing the nanocomposite.

8. Composite material according to any one of Claims 5 to 7, characterized in that not more than 20% by weight, preferably not more than 10% by weight, and particularly preferably not more than 5% by weight, of the other additives (c) have been employed for preparing the nanocomposite.

9. Composite material according to any one of Claims 1 to 8, characterized in that the surface modification has been carried out using from 0.1 to 0.9 mol, preferably from 0.25 to 0.75 mol, of water per mole of hydrolysable groups which are present.

10. Composite material according to any one of Claims 1 to 9, characterized in that the proportion by weight of the nanocomposite is from 0.1 to 80%, preferably from 1 to 40%, and particularly preferably from 1 to 20%.

11. Composite material according to any one of Claims 1 to 10, characterized in that the curing is carried out thermally, preferably at temperatures from 50°C to 300°C.

12. Composite material according to any one of Claims 1 to 11 in the form of a substrate coated with the nanocomposite, a fabric impregnated with the nanocomposite or a light building element having the substrate material consolidated with the nanocomposite sandwiched between laminate layers.

13. Use of a nanocomposite as defined in Claims 1 to 11 for coating and/or consolidation of a substrate based on vegetable materials, in particular vegetable fibres, vegetable fibre raw materials or vegetable fibre semifinished products.

## Revendications

1. Matériau composite, caractérisé par un matériau de base, à base de matières végétales, en particulier de fibres végétales, de produits bruts en fibres végétales ou de produits travaillés en fibres végétales, et par un nanocomposite en contact fonctionnel avec le matériau de base, que l'on peut obtenir en modifiant en surface :
a) des particules minérales colloïdales avec
b) un ou plusieurs silanes de formule générale (I):
Rₓ-Si-A₄₋ₓ (I)
dans laquelle les restes A sont identiques ou différents et représentent chacun un groupe hydroxyle ou un groupe éliminable par hydrolyse, à l'exception du groupe méthoxy, les restes R sont identiques ou différents et représentent chacun un groupe non-éliminable par hydrolyse, et x a la valeur 0, 1, 2 ou 3, x étant supérieur ou égal à 1 pour au moins 50 % de la quantité de silane,
dans les conditions du procédé Sol-Gel, en utilisant une quantité d'eau inférieure à la quantité stoechiométrique basée sur les groupes hydrolysables présents, en formant ainsi un sol de nanocomposite qui est éventuellement soumis à une hydrolyse et une condensation ultérieures avant la mise en contact avec le matériau de base et le durcissement subséquent.

2. Matériau composite selon la revendication 1, caractérisé en ce que l'on a réalisé la modification en surface en présence d'un catalyseur de condensation acide, à un pH de 1 à 2.

3. Matériau composite selon la revendication 1 ou 2, caractérisé en ce que l'on a soumis le sol de nanocomposite à une réaction subséquente, à une température comprise dans l'intervalle allant de la température de la salle à 120°C.

4. Matériau composite selon l'une quelconque des revendications 1 à 3, caractérisé en ce que les particules minérales colloïdales (a) sont choisies parmi les sols et les poudres dispersables de particules de l'ordre du nanomètre, de SiO₂, de TiO₂, de ZrO₂, de Al₂O₃, de Y₂O₃, de CeO₂, de SnO₂, de ZnO, d'un oxyde de fer ou de carbone.

5. Matériau composite selon l'une quelconque des revendications 1 à 4, caractérisé en ce que, pour la préparation du sol de nanocomposite, on a utilisé d'autres additifs (c), par exemple des catalyseurs de durcissement, des liants organiques, des pigments, des colorants, des additifs freinant l'inflammation, des dérivés d'éléments vitrifiables, des agents de protection contre la corrosion et/ou des produits auxiliaires pour enduction.

6. Matériau composite selon l'une quelconque des revendications 1 à 5, caractérisé en ce que l'on a utilisé pour la préparation du nanocomposite 5 à 60 % en masse, de préférence 10 à 40 % en masse et en particulier 10 à 20 % en masse de constituant (a).

7. Matériau composite selon l'une quelconque des revendications 1 à 6, caractérisé en ce que l'on a utilisé pour la préparation du nanocomposite 20 à 95 % en masse, de préférence 40 à 90 % en masse et en particulier 70. à 90 % en masse de constituant (b), exprimé en polysiloxane de formule RₓSiO_{(2-0,5x)}.

8. Matériau composite selon l'une quelconque des revendications 1 à 7, caractérisé en ce que l'on a utilisé pour la préparation du nanocomposite pas plus de 20 % en masse, de préférence pas plus de 10 % en masse et en particulier pas plus de 5 % en masse d'autres additifs (c).

9. Matériau composite selon l'une quelconque des revendications 1 à 8, caractérisé en ce que l'on a réalisé la modification en surface en utilisant 0,1 à 0,9 mole d'eau, de préférence 0,25 à 0,75 mole d'eau par mole de groupes hydrolysables présents.

10. Matériau composite selon l'une quelconque des revendications 1 à 9, caractérisé en ce que la proportion en masse du nanocomposite atteint 0,1 à 80 % en masse, de préférence 1 à 40 % en masse et en particulier 1 à 20 % en masse.

11. Matériau composite selon l'une quelconque des revendications 1 à 10, caractérisé en ce que le durcissement a lieu par voie thermique, de préférence à une température comprise entre 50°C et 300°C.

12. Matériau composite selon l'une quelconque des revendications 1 à 11, sous la forme d'un matériau de base enduit du nanocomposite, d'un tissu imprégné du nanocomposite ou d'un élément de construction léger qui contient le matériau de base renforcé par le nanocomposite, placé entre des couches de stratifié.

13. Utilisation d'un nanocomposite tel que défini dans les revendications 1 à 11, pour l'enduction et/ou la consolidation d'un matériau de base, à base de matières végétales, en particulier de fibres végétales, de produits bruts en fibres végétales ou de produits travaillés en fibres végétales.
